# EUROPEAN PATENT SPECIFICATION

(11) **EP 2 667 734 B1**
(45) Date of publication and mention of the grant of the patent: **04.03.2015**
(21) Application number: 12716701.3
(22) Date of filing: 26.01.2012
(51) Int. Cl.: A23N 17/00, A01K 61/00, A22C 25/20

(54) **FLOAT FOR ENSILATION**
SILAGEFLOSS
FLOTTEUR POUR ENSILAGE

(30) Priority: 27.01.2011 NO 20110129
(43) Date of publication of application: 04.12.2013
(73) Proprietor: Havsterk AS, 6940 Eikefjord (NO)
(72) Inventor: VASSBOTTEN, Alex, 6940 Eikefjord (NO)
(74) Representative: Fluge, Per Roald
(86) International application number: PCT/NO2012/000011
(87) International publication number: WO 2012/102621

(56) References cited:
- WO-A1-87/04051
- WO-A1-2010/019053
- GB-A- 2 174 587
- US-A- 4 881 482

## Description

### Introduction

The present invention relates to a float for ensilation comprising hulls with one or more closed compartments with an inlet to a grinder arranged to receive and grind fish, and arranged to feed the ground fish mass further down into one or more of the compartments. A dosing device is arranged to dose a desired amount of ensiling liquid from a ensiling liquid tank to the ground fish mass, preferably simultaneously during the grinding process.

Generally, the ground ensiled fish mass has a pH around 4 and there occur an ensiling process that kills viruses and bacteria and thus preserves the fish mass. Later, the fish mass may be neutralized, dried and pelleted for fish feed or animal feed.

### Description of treatment: ensilation

### Short description

Ensilation is conservation by means of acidification. The process is relevant in many contexts. In this context, the description and the assessment is limited to ensilation of fish. Acidification agents are usually based on formic acid. Acidification of fish waste activates the digestive enzyme pepsin in the cells. Pepsin is a protease, which degrades many different proteins. The process of ensilation forms a soluble "soup", where in most of the materials apart from the bones are degraded. Thus the product of ensilation consists of a mixture of soluble, partly degraded proteins, in addition to oil, bone and minerals. Ensilation requires an acid-resistant tank with grinding. Ensiled fish is storage stable. Ensilation may be combined with centralized further processing.

### Problems related to the prior art

- The fish is usually roughly ground into large cube-shaped pieces of about 1-2 cm size. To grind the fish even finer requires more time and more energy than coarse grinding and is therefore not appropriate, especially if one intends to kill off the large quantities of fish in a short time, such as by emergency slaughtering to prevent infection by disease outbreaks. Freshly ground fish mass may be very viscous, and may increase viscosity after a few hours. The proteins in the coarsely ground fish remains intact for a long time even after the addition of ensiling liquid, and are not degraded until after about 48 hours. The fish mass is not liquidized and pumpable until it has been degraded by the ensiling process. Before this occurs the ground and ensiling mixed fish mass is so viscous that it acts as a kind of tough fish stuffing, and is not very pumpable.
- If one have a fish farm of a maximum of 3 x 786 tons = 2,358 tons of biomass, in the form of live fish in net cages, according to the regulations one should have an ensiling tank capable to grind up and store approx. 1% of this mass per day at any time, i.e. a capacity of only about 24 tons per day. A medium-sized farm may have e.g. 10 ring net cages with e.g. 200 tons of fish standing in each net cage. It may therefore be necessary to slaughter at least up to 200 tonnes of fish upon an emergency slaughtering. Such emergency slaughtering must be carried out quickly and in an efficient and hygienic way.
- A grinding and ensiling tank is usually placed in an integrated feeding float. A feeding float comprises one or more feeding tank units and a feeding system and is permanently anchored at the fish farm. Such a grinding and ensiling tank is too small to handle the emergency slaughtering of large quantities of fish such as contagious disease outbreaks, and remove the fish from the net cage or disease-carrying net cages of the fish farm as soon as possible.
- Existing fish farms may have an ensiling tank placed as part of the feeding float. Such an ensiling tank is usually so small that it does not have the capacity to receive large amounts of fish, e.g. slaughtering demanded by a veterinarian. A feeding float that is permanently anchored may not be used for emergency slaughtering for two reasons: It has too small grind capacity, small grinder tank capacity, and is not mobile as it is permanently anchored as an integral part of the farm and must be continuously used for feeding fish in the entire system.
- Dead fish may alternatively be transported to a grinding and ensiling plant on land and the ground fish mixture is pumped to storage tanks that are on land or float in the sea. Such a floating vessel is produced by Bokn plast and has no fish grinder on board: it is an elongated tank provided with midships deck hatch and is arranged to receive a lot of ground fish from a quay arranged grinder. The transport of dead fish to shore or to a separate vessel is cumbersome and there are many operations of unloading and reloading in order to finish the grinding and the ensilation. Much of the existing equipment to handle large amounts of fish for ensilation is thus insufficient or very labor intensive, and involves a high risk of spills and the spread of infection.
- The fact that the ground fish mass of fresh fish is very sticky may be solved by mixing in about 10% of water relative to the ground fish mass. This makes the ground fish mass less sticky and thus more easily pumpable. This incurs, however, three problems:
   a) The added, mixed water should be evaporated out of the diluted ensiled fish mass, before this is used as feed.
   b) If one has to pay to dispose of the diluted mixture ensiled fish mass because it may be considered as hazardous waste, one must in principle pay to deliver an extra 10% which is only contaminated water.
   c) The mixed-in water must also be added extra ensiling liquid as for the acidity of the total ensiling mass to become correct. The extra ensiling liquid is expensive and in principle wasted because it could have been avoided. In order to neutralize the total amount of acid afterwards it is also required an unnecessary amount of base, which is also expensive.
   d) If one adds water without sufficient agitating or adds water without the addition of sufficient ensiling liquid, one may risk fermentation in the insufficiently ensiled parts of the ground fish mass. Adding water or extra ensiling liquid therefore require additional use of energy, extra acidity measurements and extra work, and is desirable to avoid. The refining process for ensiling comprises a to large degree evaporation to reduce the degree of humidity. Evaporation requires energy and adding unnecessary amounts of water to evaporate later on is both cost-increasing and environmentally objectionable. Therefore, any addition of liquid should be avoided as far as possible.

The applicant's own Norwegian patent NO328445 "Flåteenhet for ensiling av dødfisk" has a grinder tank arranged below a fish grinder to make a common inlet for fish mass to the float units many tanks and has an ensiling dosing apparatus with proportional dosing of ensiling liquid for coarse ensilation of the ground fish mass. By grinding of fresh fish, the problems mentioned above with stickiness of the fish mass mean that it becomes necessary to add water to make the coarse fish ensiling mass pumpable into the final ensiling tank. In the ensiling tank there is a combined grinding and transport pump for further mixing of fish mass and internal transport to storage tanks.

However, problems may arise in such storage tanks or ensiling tanks due to the precipitation of fish bones to form a layer of fish bone remains along the bottom of the ensiling tank, and the fish bone remains may over time form a consolidated, more solid layer along the bottom of the tank. Over this layer, there will float a layer of thin liquid fish ensiling mass, and on top there will be separated out a layer of fish fat.
Such a layer of fish bone remains have higher density than the overlying layers, and it may therefore for certain types of liquid tanks create a stability problem if the layer is displaced towards one end of the tank, and where in the lighter layer of fat shifts in the opposite direction towards the opposite end of the tank, such as when the elongated horizontal liquid storage tank made of Bokn plast. Such a liquid tank may thus rise itself upright, quite suddenly and undesirable. Several problems may then occur: The moorings may be damaged, the tank itself may be damaged by impact towards the bottom or other vessels; The midship hatch end up under water and becomesinaccessible, and risk of leakage arises, and one may risk that the sedimented bottom layer of bones becomes difficult to remove from the deeper end of the averaged tank, and furthermore the bottom layer may consolidate, please see below.

Should such a settled layer of fish bones occur, irrespective of stable or damaged condition of the tank, there is a risk that the bones are consolidated. Upon emptying of a tank with a layer of fish bones may therefore be required to flush with additional quantities of water from a large and powerful water pump to dissolve it. This thus requires extra water and extra pumping energy, and further addition of ensiling liquid to prevent incorrect pH and thus fermentation.

### Short summary of the invention

The present invention is a simplification of present floats for ensiling and is a float for ensilation comprising the following features:
- A hull (1) with one or more closed compartments (3) in the hull (1),
- With an inlet (4) to a grinder (5) arranged to receive and grind fish and arranged to feed the ground fish mass to one or more of said compartments (3),
- A dosing device (6) arranged to dose a desired amount of ensiling liquid from a ensiling liquid tank (7) to said ground fish mass,
- A rough stirring propeller (8) arranged to stir and mix said ground fish mass and said ensiling liquid sufficiently in order to prevent deposition or consolidation of the bones in the bottom of said compartment (3).

Further advantageous characteristic features is defined by the dependent patent claims.

### Short figure captions

A preferred embodiment of the invention is shown in the attached figure drawings.
Figure 1 is an isometric view of an embodiment of a float for ensilation according to the invention.
Figure 2 is a deck plan view of the same embodiment of a float for ensilation according to the invention. It is shown a fish grinder (5) with a feeding hose (9) to a hatchway (15) on one of the ensiling tanks.
Figure 3 is a horizontal section through the pontoons and deck structure and shows ensilation tanks (3) and stirring propellers (8) and illustrated in a simplified way different circulation patterns of ground mass in the ensilation tanks.
Figure 4 is a vertical section through one of the tanks and an end view of the deck equipment. It is shown a vertical arm (19) with the stirring propeller (8) in the tank (3). It is also shown a hose running from the grinder's outlet to one of the tanks.
Figure 5 is a vertical section orthogonal to the section in Figure 4, at right angles to the longitudinal axis of the tank, and front elevation of the deck structure and the deck equipment.

### Description of an embodiment of the invention

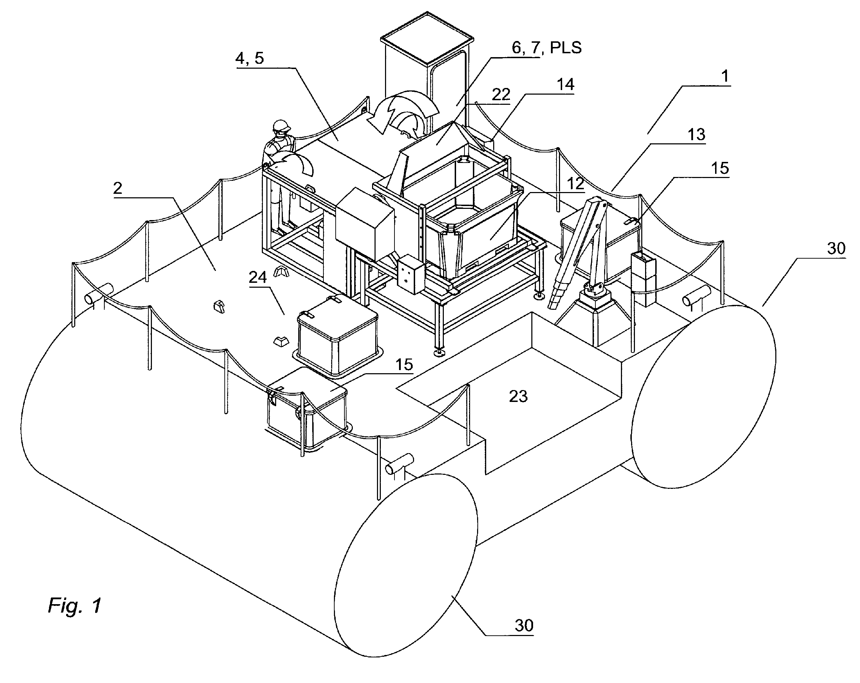

The invention shown in Figure 1-5 is a float for ensilation. The floating unit, according to the invention is designed to receive, grind, ensile and store dead fish from fish farms. The float for ensilation comprises a hull (1) with one or more closed compartment (3) in the hull (1), and wherein there is arranged an inlet (4) to a grinder (5) arranged to receive and grind fish and to feed the ground fish mass to one or more of the tank rooms (3). Dead fish or disease contagioous fish or ill fish may be loaded to the ensiling vessel with a crane (13) or another appropriate tool or a system for loading or pumping of fish. If one uses a fish pump system one shall have a water separating unit in order to avoid unnecessary supply of water to the ensiling tank.

The grinder may be provided with covers that tilts to one side as shown in Figure 1 before the receiving of dead fish. The float for ensilation according to the invention is preferably provided with a deck structure with a deck (2) that forms the top of the one or more tank rooms (3). Hatches (15) are mounted in the hatch frames on this deck (2).

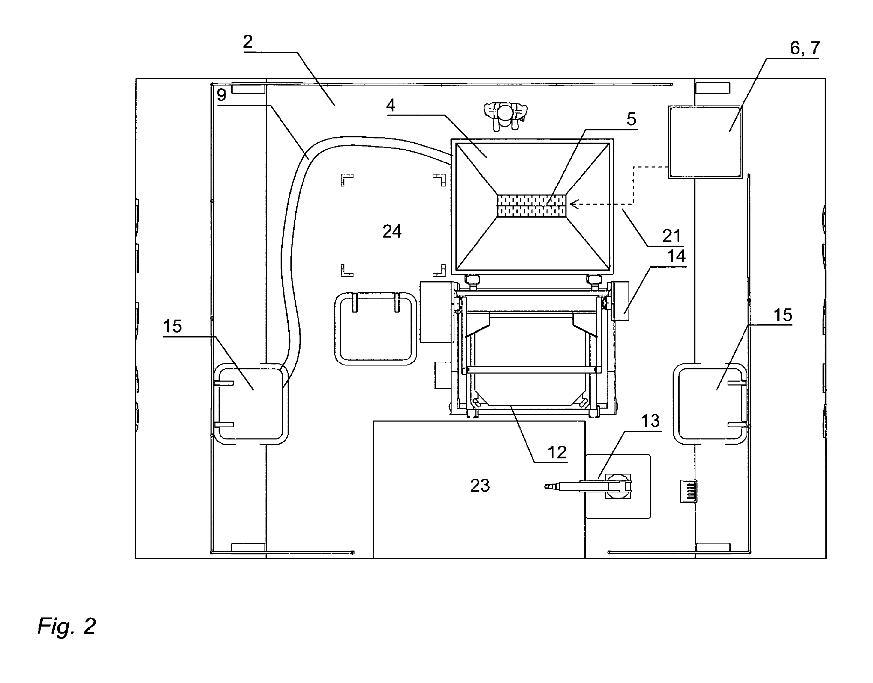

The fish is dropped in the funnel (4) to the grinder (5) which is arranged to grind up the fish, see Fig. 1. The grinder (5) is in a preferred embodiment made in stainless steel and corrosion resistant components. The fish is ground into relatively coarse pieces and led directly into the tank room (3). To the ground mass is simultaneously added ensiling acid via an acid pipe (21) in an assumed suitable dosage adapted to the amount of continuous ground fish. The acid pipe (21) may be quite directly connectedto the grinder (5) to ensure good mixing, see Fig. 2. A dosing unit (6) is arranged to dose a desired amount of ensiling liquid from a ensiling liquid tank (7) to the ground fish mass. The dosage unit (6) is provided with a ensilation injection pipe or "acid-line" (21) that preferably runs in to the grinder (5). Thus ensilation liquid is lead directly into the fish mass during the grinding process, and mixed in. The amount of acid may for example be simply calculated based on the capacity of the grinder and its actual running time, for example, when the power consumption at the grinder is higher than the idle consumption, or based on the counting of fish and calculation of required additive amount, or be based on the experience of the individual operator. The dosage unit (6) may in the embodiment of the invention be provided with a PLC controller and arranged to work with with the grinder (5), and may also have sensors which measure pH values in the tank (3).
The grinder is in an advantageous embodiment equipped with an outlet hose (9) with movable outlet which leads to the tank room (3). Thus, one may avoid the temporary storage of the ground mass, and the ground mass is pressed through the hose (9) which is laid down through the desired hatch (15), please see Fig 2.

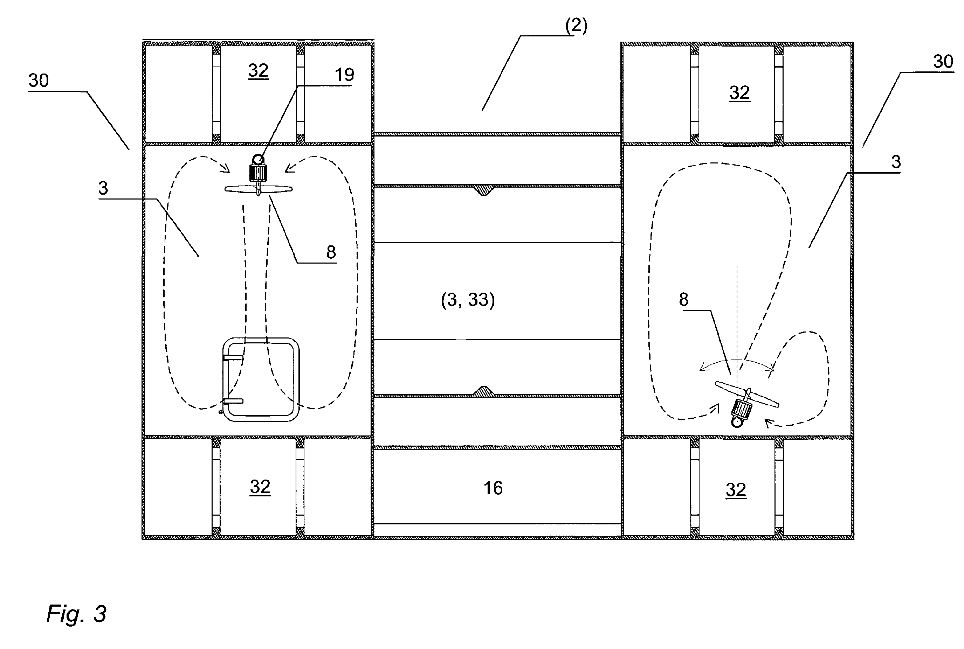

The float for ensilation is provided with a coarse stirring propeller (8) arranged to stir the ground fish mass in preferably each of the tank rooms (3). The stirring propeller (8) in the tank (3) may run concurrently with the grinder (5) to ensure mixing and blending of acid simultaneously and in a short time. The stirring propeller is run to prevent precipitation or sedimentation of bone fragments and other material in the bottom of the tank compartment (3), and for mixing the ground fish mass and ensiling liquid sufficiently. Thus the main problems mentioned above are solved.
The float for ensilation is in an embodiment arranged with the hull (1) designed as a catamaran with parallel arranged cylindrical pontoons (30), wherein each pontoon (30) comprises one or more compartment (3). Ballast tanks (32) may be arranged at the ends of each pontoon (30) as shown in Figure 3 Ballast tanks (32) may be used to trim the float if, for example, a first of the tanks in one of the pontoons is much filled and the opposite tank is filled to a little degree, by filling the opposite ballast tanks.

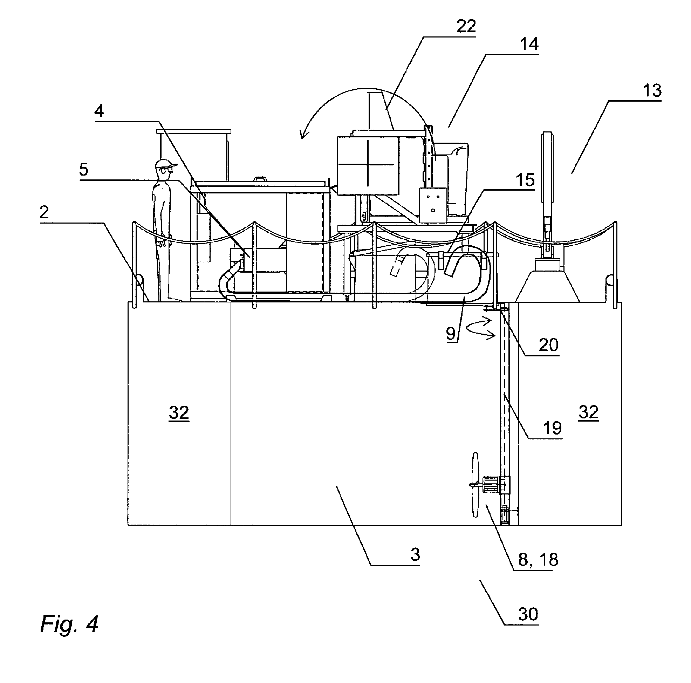

In a preferred embodiment the float for ensilation is, according to claim 1, provided with a hose (9) arranged between the grinder's (5) outlet and tank room (3). Preferably the hose is extended to a hatchway (15) of a tank compartment (3). This is shown in Figure 2 and Figure 4.

Pumping of dead or infected fish requires that one shall separate water in a water separating unite before the fish are released into the grinder. The pumped water may be contagious infested. Thus, pumping of fish may spread infected water and thus be unhygienic. There may be more hygienic to transport the dead fish from net cages to the floating vessel in fish tanks (12), it provides a cleaner handling of the fish and transport to the grinder in closed vessels without significantly large amounts of water, and vessels may be disinfected after use. The deck (2) has a recess (23) for receiving the fish tanks with dead fish. A crane (13), preferably rotatable and telescopic, is mounted on a crane foundation on the deck (2) and arranged to move the fish tanks (12) to tilt frame (11) at the grinder (5). The crane in an preferred embodiment is a hydraulic crane, where hydraulic energy is supplied from a pressure generator driven by the generator. The tub in the tilting frame may be lifted and rotated about an axis indicated as shown in Figure 4A funnel-shaped channel (22) is arranged on the tilting frame in order to guide the dead fish into the funnel-shaped inlet (4), please see Fig. 1, 2 and 4.

The total volume of the tank room is over 30 cubic meters, preferably more than 60 cubic meters in the embodiment showed in the figures. By extending the pontoons (30) and / or expand the diameter of the tank rooms (3), thereby extending their (3) volume or number, the volume capacity of the ensiled fish mass may easily be increased to over 200 to 300 tons, depending on what is considered necessary to handle a situation where the need for emergency butchering of much of the fish population in a cage occurs.

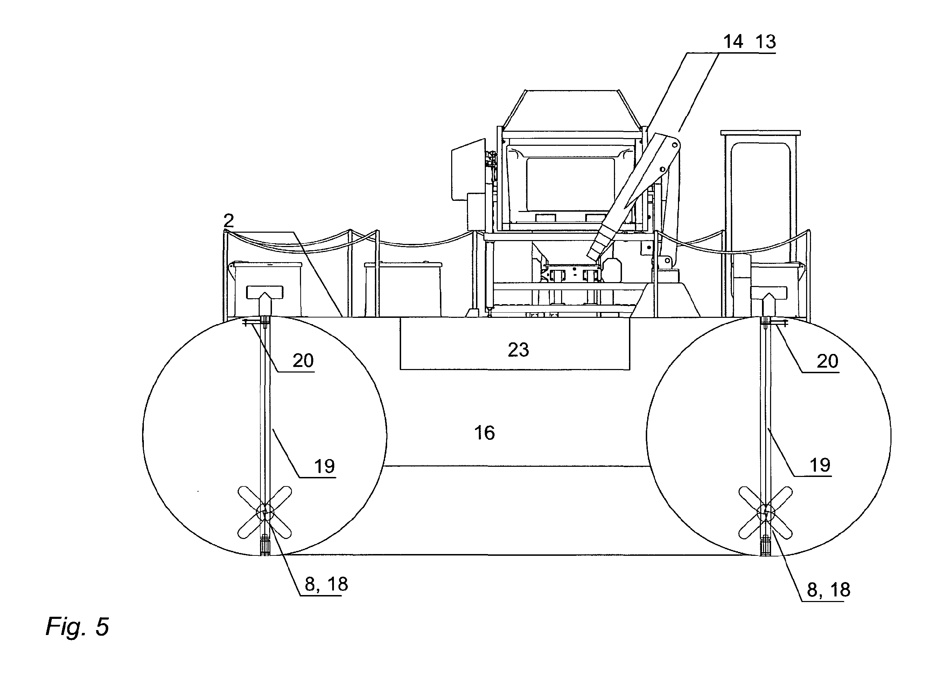

The stirring propeller (8) is driven by a motor (18). Stirring propeller has preferably a diameter of 40 cm or more, and a rise of approx. 10 cm. Thus, it could move a large fish mass volume per turn. The propeller is slow-moving with a speed between 1 and 3 turns per second, i.e. between 60 and 180 rot / min. The propeller is arranged with a mainly horizontal rotational axis. In an embodiment of the invention the propeller is arranged on an arm (19) extending into the tank room (3). Please see Figure 4 and 5. As shown in Figure 4 and 5 the direction of the propeller axis is rotatable in that the arm (19) may be set by means of a control mechanism (20). The control mechanism (20) may be accessed from the deck or through the hatchway (15) and may comprise a manually rotatable and lockable plate on the arm (19). Thus, the direction of the propeller may vary as shown in Figure 3, so that the ground mass may be guided in various directions, and it achieves better mixing for all parts of the tank compared to if the propeller shaft had fixed direction. Thus it is achieved that the bones have not the opportunity to consolidate.

The ground mass, in the preferred embodiment is guided directly to the ensiling tank (3) from the grinder (5) via the hose (9). Alternatively, there may be only one grinder tank (3) for each grinder (5) so that the grinder releases the ground mixture directly into the ensiling tank (3). This ensures that the sticky ground mass is not accumulated between the grinder and ensiling tank and avoids the problems of stickiness and at the same time avoiding moving the fish mass in several operations. One may measure the pH of the acid added ground fish mixture in the tank after the grinding process is performed in order to re-adjust to the correct amount of acid in the ensiling tank (3).

The float for ensilation according to the invention has the advantage that it only has one inlet and the fish will be ground immediately. Thus, the inlet and around the funnel (4), as well as the fish tank (12), tilting device (14) and appropriate sections of the deck be disinfected immediately after grinding and emptying, and in this way the risk of infection is reduced significantly. The disinfected tank may be moved to the storage area (24) for empty, cleaned tanks, and possibly be turned over and stacked there. One of the smaller tanks on board, such as a tank (33) in the deck structure (2) may be used to store disinfecting water used. The vessel is preferably provided with regular disinfection equipment, high pressure washers and small tanks for soap and disinfectants.
When the fish is ground and ensiling liquid is added and mixed in the ensiling tank there is no longer a risk of infection from the ensiling mass. Bacteria and viruses will be broken down by the ensiling liquid. No mass may be removed from the floating unit without originally having passed through the grinder (5) and ensiling tank (3). Ensiling mass may be pumped from tank rooms (3) by arranging a pump hose down through the hatches (15), or pumped out via separate pump lines from the tank rooms (3).

The floating unit according to the invention comprises a floating hull designed for independent operation or freely anchored or at quay or at fish farms, such as a net cage containing dead fish to be handled. The floating unit according to the invention may be moored on an easily accessible location in the vicinity of fish farms which it shall serve, but also be mobile and moveable and thus constitute a disease outbreak stand by arrangement. This is a great advantage because the dead fish handling vessel, according to the invention may be placed at a fish farm where it is needed for rapid slaughtering and provide high capacity and very short transport of the sick / dead / infected fish from the cage to the grinder. In this way one may limit the spread of infection significantly.
The floating unit, according to the invention may have its own generator room (16) with a place for diesel powered electric or hydraulic generator, and a separate fuel tank. This may be arranged in the catamaran deck structure between the tanks as shown in Figure

The ensiling chemicals may include formic acid. Measurements of pH in the tank room (3) indicates there is a need for further addition of acid, or whether there is a need for more ground fish mass. If the measurements show a low pH value, i.e. that it is too acidic in the mass, more fish may be added, or more water is added and stirred it all out again. Nevertheless, the agitation of the ground and added ensilation liquid mass should be performed in an efficient manner, and then the stirring propellers (8) must be run until the mixture is sufficiently homogeneous in pH. If the pH measurements are satisfactory, or independent of this fact, the ground and ensiled mass stirred / activated by means of stirring propeller (8) with a desired time interval, e.g. every half hour, every hour, etc. This prevents sedimentation of bone fragments, prevents the consolidation of the bones and mixes ensiled mass better.

The floating unit according to the invention is preferably constructed of a material which is not significantly affected by chemical ensiled mass with pH close to 3.8 or spillage of ensiling acid. The floating units main structures are preferably constructed of composite materials such as fiber-reinforced plastic. Such materials are also easy to clean and disinfect.

The floating unit according to the invention shall to the greatest possible degree be independent with its own generator so that it at a little as possible degree occupies other power means, but may also be arranged to take advantage of shore power source or external power source.
The floating unit according to the invention has a deck (2) that forms the top of the one or more tank rooms (3). The deck may also be formed separately over the tanks, if the tank itself is closed, such as the similar cylindrical tank shapes showed in the preferred embodiment.
The float for ensilation according to the preferred embodiment of the invention have the hull (1) and is formed as a catamaran with parallel arranged cylindrical pontoons (30), wherein each pontoon (30) includes one or more compartments (3). This has significant advantages over rectangular vessels divided into four rectangular tanks, because such vessels get a small deck area and comes easily out of the balance when one of the tanks are filled or emptied, and are difficult to ballast.

## Claims

1. A float for ensilation comprising the following features:
- A hull (1) with one or more closed compartment (3) in the hull (1),
- With an inlet (4) to a grinder (5) arranged to receive and grind fish and arranged to feed the ground fish mass to one or more of said compartments (3),
- A dosing device (6) arranged to dose a desired amount of ensiling liquid from a ensiling liquid tank (7) to said ground fish mass,
- A rough stirring propeller (8) arranged to stir and mix said grounded fish mass and said ensiling liquid adequately in order to prevent deposition or consolidation of the bones in bottom of said compartment (3).

2. The float for ensilation according to claim 1, wherein said hull (1) is formed as a catamaran with parallel arranged cylindrical pontoons (30), wherein each said pontoon (30) comprises one or more compartment (3).

3. The float for ensilation according to claim 1-2, with a preferably mobile hose (9) arranged between said grinder's (5) outlet and said compartment (3).

4. The float for ensilation according to claims 1-3, with a motorized tilting frame (11) for fish tank (12) arranged at said inlet (4) and arranged to empty fish tanks over to said grinder (5).

5. The float for ensilation according to claims 1-4, with a crane (13) mounted on a crane foundation on deck (2) and arranged to move said fish tanks (12) to said tilting frame (11).

6. The float for ensilation according to claims 1-5, preferably with a deck (2) that forms said top of the one or more tank rooms (3).

7. The float for ensilation according to claims 1-6, wherein said dosing device (6) is provided with a ensiling injection line (21), which runs into said grinder (5), wherein said ensiling injection line (21) is arranged to guide and mix said ensiling liquid directly into the mass during the grinding process.

8. The float for ensilation according to claims 1-7, wherein said stirring propeller (8) is driven by a motor (18).

9. The float for ensilation according to claims 1-8, wherein said propeller is slow-moving with a rotational speed between 1 and 3 revolutions per second.

10. The float for ensilation according to claims 1-9, wherein said propeller is arranged mainly with horizontal rotation axis.

11. The float for ensilation according to claims 1-10, wherein said propeller is arranged on an arm (19) extending into said compartment (3).

12. The ensilation tank according to claim 1-11, wherein the direction of said propeller axis is revolving by setting said arm (19) by means of a lockable control mechanism (20).

## Patentansprüche

1. Floß zur Silierung, umfassend die folgenden Merkmale:
- einen Schwimmkörper (1) mit einer oder mehreren geschlossenen Kammern (3) in dem Schwimmkörper (1),
- mit einem Einlass (4) zu einem Mahlwerk (5), das angeordnet ist, um Fisch zu empfangen und zu mahlen, und angeordnet ist, um die gemahlene Fischmasse an eine oder mehrere der Kammern (3) zuzuführen,
- eine Dosiereinrichtung (6), die angeordnet ist, um eine gewünschte Menge an Silierflüssigkeit von einem Silierflüssigkeitstank (7) zu der gemahlenen Fischmasse zu dosieren,
- einen Grobrührwerkspropeller (8), der angeordnet ist, um die gemahlene Fischmasse und die Silierflüssigkeit in geeigneter Weise zu rühren und zu mischen, um das Absetzen oder Verfestigen der Knochen am Boden der Kammer (3) zu verhindern.

2. Floß zur Silierung nach Anspruch 1, wobei der Schwimmkörper (1) als ein Katamaran mit parallel angeordneten zylindrischen Pontons (30) ausgebildet ist, wobei jeder Ponton (30) eine oder mehrere Klammern (3) umfasst.

3. Floß zur Silierung nach Anspruch 1 bis 2, mit einem vorzugsweise mobilen Schlauch (9), der zwischen dem Auslass des Mahlwerks (5) und der Kammer (3) angeordnet ist.

4. Floß zur Silierung nach den Ansprüchen 1 bis 3, mit einem motorisierten Kipprahmen (11) für Fischbecken (12), der an dem Einlass (4) angeordnet ist, um Fischbecken in das Mahlwerk (5) zu entleeren.

5. Floß zur Silierung nach den Ansprüchen 1 bis 4, mit einem Kran (13), der auf einem Kranfundament an dem Deck (2) montiert und angeordnet ist, um die Fischbecken (12) zu dem Kipprahmen (11) zu bewegen.

6. Floß zur Silierung nach den Ansprüchen 1 bis 5, vorzugsweise mit einem Deck (2), das die Oberseite des einen oder der mehreren Beckenräume (3) bildet.

7. Floß zur Silierung nach den Ansprüchen 1 bis 6, wobei die Dosiereinrichtung (6) mit einer Siliereinspritzleitung (21) versehen ist, die in das Mahlwerk (5) hinein läuft, wobei die Siliereinspritzleitung (21) angeordnet ist, um die Silierflüssigkeit während des Mahlvorgangs direkt in die Masse einzuleiten und einzumischen.

8. Floß zur Silierung nach den Ansprüchen 1 bis 7, wobei der Rührwerkspropeller (8) durch einen Motor (18) angetrieben wird.

9. Floß zur Silierung nach den Ansprüchen 1 bis 8, wobei der Propeller sich langsam mit einer Drehzahl zwischen 1 und 3 Umdrehungen pro Sekunde bewegt.

10. Floß zur Silierung nach den Ansprüchen 1 bis 9, wobei der Propeller hauptsächlich mit der horizontalen Drehachse ausgerichtet ist.

11. Floß zur Silierung nach den Ansprüchen 1 bis 10, wobei der Propeller an einem Arm (19) angeordnet ist, der sich in die Kammer (3) hinein erstreckt.

12. Silierbehälter nach Anspruch 1 bis 11, wobei die Richtung der Propellerachse gedreht wird, indem der Ann (19) mittels eines verriegelbaren Steuermechanismus (20) eingestellt wird.

## Revendications

1. Flotteur pour ensilage comprenant les éléments suivants :
- une coque (1) avec un ou plusieurs compartiment(s) fermé(s) (3) dans la coque (1),
- avec une entrée (4) à un broyeur (5) agencé pour recevoir et broyer du poisson et agencé pour fournier la masse de poisson broyé à un ou plusieurs parmi lesdits compartiments (3),
- un dispositif de dosage (6) agencé pour doser une quantité désirée de liquide d'ensilage provenant d'un réservoir de liquide d'ensilage (7) dans ladite masse de poisson broyé,
- une hélice d'agitation grossière (8) agencée pour agiter et mélanger ladite masse de poisson broyé et ledit liquide d'ensilage de façon adéquate afin d'empêcher le dépôt ou la consolidation des os au fond dudit compartiment (3).

2. Flotteur pour ensilage selon la revendication 1, dans lequel ladite coque (1) est formée en tant qu'un catamaran avec des pontons cylindriques agencés parallèlement (30), où chacun desdits pontons (30) comprend un ou plusieurs compartiment(s) (3).

3. Flotteur pour ensilage selon les revendications 1 et 2, avec un tuyau de préférence mobile (9) agencé entre ladite sortie du broyeur (5) et ledit compartiment (3).

4. Flotteur pour ensilage selon les revendications 1 à 3, avec un châssis basculant motorisé (11) pour un vivier (12) agencé au niveau de ladite entrée (4) et agencé pour vider les viviers vers ledit broyeur (5).

5. Flotteur pour ensilage selon les revendications 1 à 4, avec une grue (13) montée sur une base de grue sur un pont (2) et agencée pour déplacer lesdits viviers (12) vers ledit châssis basculant (11).

6. Flotteur pour ensilage selon les revendications 1 à 5, de préférence avec un pont (2) qui forme ladite partie supérieure du ou des plusieurs espace(s) réservoir(s) (3),

7. Flotteur pour ensilage selon les revendications 1 à 6, dans lequel ledit dispositif de dosage (6) est muni d'une conduite d'injection d'ensilage (21), qui rentre dans ledit broyeur (5), où ladite conduite d'injection d'ensilage (21) est agencée pour guider et mélanger ledit liquide d'ensilage directement dans la masse pendant le processus de broyage.

8. Flotteur pour ensilage selon les revendications 1 à 7, dans lequel ladite hélice d'agitation (8) est entraînée par un moteur (18).

9. Flotteur pour ensilage selon les revendications 1 à 8, dans lequel ladite hélice est lente avec une vitesse de rotation comprise entre 1 et 3 tour(s) par seconde.

10. Flotteur pour ensilage selon les revendications 1 à 9, dans lequel ladite hélice est agencée principalement avec un axe de rotation horizontal.

11. Flotteur pour ensilage selon les revendications 1 à 10, dans lequel ladite hélice est agencée sur un bras (19) s'étendant dans ledit compartiment (3).

12. Réservoir d'ensilage selon les revendications 1 à 11, dans lequel la direction dudit axe d'hélice tourne en réglant ledit bras (19) au moyen d'un mécanisme de commande verrouillable (20).
